# EUROPEAN PATENT SPECIFICATION

(11) **EP 3 238 401 B1**
(45) Date of publication and mention of the grant of the patent: **20.02.2019**
(21) Application number: 14819022.6
(22) Date of filing: 23.12.2014
(51) Int. Cl.: H04L 29/06

(54) **NETWORK EXTENDED TCP SPLICING**
ERWEITERTES TCP-SPLEISSEN IN EINEM NETZWERK
ÉPISSAGE TCP ÉTENDU EN RÉSEAU

(43) Date of publication of application: 01.11.2017
(73) Proprietor: Huawei Technologies Co., Ltd., Longgang District Shenzhen, Guangdong 518129 (CN)
(72) Inventor: TOUITOU, Dan, 80992 Munich (DE); GAMPEL, Eran, 80992 Munich (DE)
(74) Representative: Kreuz, Georg Maria
(86) International application number: PCT/EP2014/079173
(87) International publication number: WO 2016/102004

(56) References cited:
- US-A1- 2006 190 609
- Li Zhao, Yan Luo, Laxmi Bhuyan: "SpliceNP: A TCP Splicer using A Network Processor", , 1 October 2005 (2005-10-01), XP002741884, Retrieved from the Internet: URL:http://ieeexplore.ieee.org/stamp/stamp .jsp?arnumber=4675273 [retrieved on 2015-07-07]

## Description

### FIELD OF THE INVENTION

The present invention relates to network communication generally and to a system and a method for extending the functionality of TCP (Transmission Control Protocol) splicing in network communications in particular.

### BACKGROUND OF THE INVENTION

Many of today's communication networks rely on proxies to deliver network functions. Generally, a proxy may act as an intermediary between a client and a server in order to provide additional functionality such as better user experience.

Many proxies are implemented as software programs which run in user space at the application level of the TCP/IP stack or OSI stack. In the application level, the proxy may sit on a user's computing device as an application proxy where it may intercept connections between the computing device (client) and a server and operate on these connections. Example of these application proxies may include HTTP proxies, SOCKS proxies, and WEB proxies, among others. An application proxy may be used as a load balancer that intercepts a request coming from a client, analyzes it and based on the result of the analysis may select a server to whom it may forward the request for more efficient delivery of the client's request. Application proxies may also be used for content filtering, for caching, for accessing specific network sites, among numerous other applications.

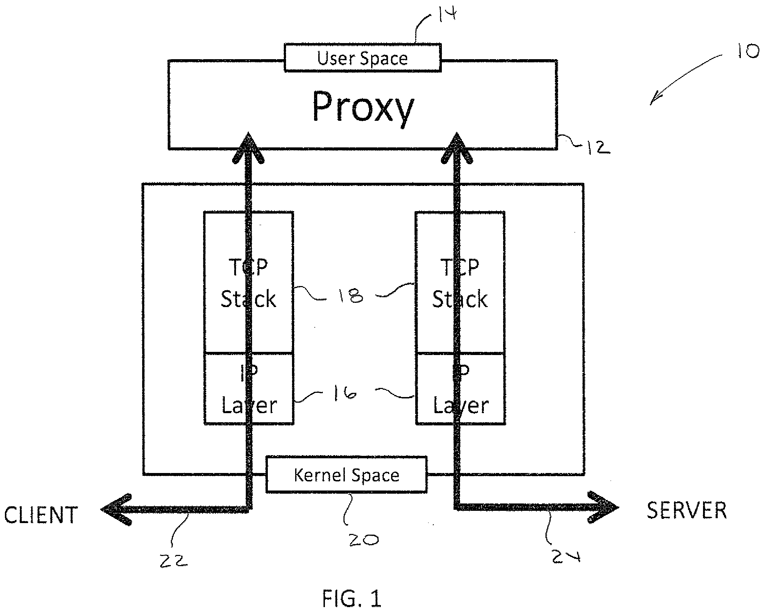

An example of an application proxy implemented in user space is shown in the representative client - server connection shown in Figure 1. In the figure are illustrated a client-server connection 10 including application proxy 12 in user space 14, and IP layer 16 and TCP stack 18 in kernel space 20. Information transfer between the client and the server may include sending packets, and is shown by the network connection 22 between the client and proxy 12 and the network connection 24 between the proxy and the server.

In client-server connection 10, packets sent from the client to the server may be sent through network connection 22 to IP layer 16 and TCP stack 18 where the information contained by the packets may be copied into buffers in the kernel space 20. From kernel space 20 the packets may be sent into user space 14 where again the information contained by the packets may be copied into buffers by proxy 12. In addition to copying the information, proxy 12 may additionally operate on the information, including making changes in the information, before sending the packets to the server through network connection 24. In a reverse direction, packets from the server to the client may be sent through network connect 24 to IP layer 16 and TCP stack 18 where again the information contained therein may be copied into the buffers in kernel space 20, and from there into user space 14 where again the information may be copied into the buffers by proxy 12. Again, proxy 12 may perform additional operations on the information received from the server before sending it onwards to the client.

Proxy 12 may intercept the client-server connections at the socket layer and may identify the client and server each by information which may include an address and a port number contained in the packets (client socket and server socket). This may eliminate proxy 12 having to copy the TCP and IP headers in the packets into the buffers in user space 14, which may somewhat improve the performance of client - server connection 10. Nevertheless, the rest of the information being transferred between the client and the server may still be copied into the buffers in user space 14. As a result, numerous calls may still be required to access the data from the buffers. Furthermore, the packets are still required to go through all levels of TCP stack 18 at least twice. Both these conditions may contribute to lowering system performance.

In an effort to improve the performance of the representative client - server connection previously described, a technique known as TCP splicing may be used. Such a technique is described in U.S. Patent No. 5,941,988 to Bhagwat et al. wherein is disclosed "A method of merging two separate TCP connections terminating at a common host and 'gluing' them into a single connection between two end systems, where the single connection preserves TCP end-to-end semantics. The technique retains the session setup functions of the transport layer proxy, but provides a method to push the data copying into kernel space to improve the relay operation. More specifically, a byte stream arriving on one end of the split connection is mapped directly into the sequence number space of the other split connection. This process of mapping, or TCP gluing, involves updating a subset of TCP and IP header fields; that is, source and destination addresses, port numbers, sequence numbers and checksum. The changes to the TCP/IP packet headers are performed on-the-fly as packets are relayed over the glued connection between the original separate TCP connections".

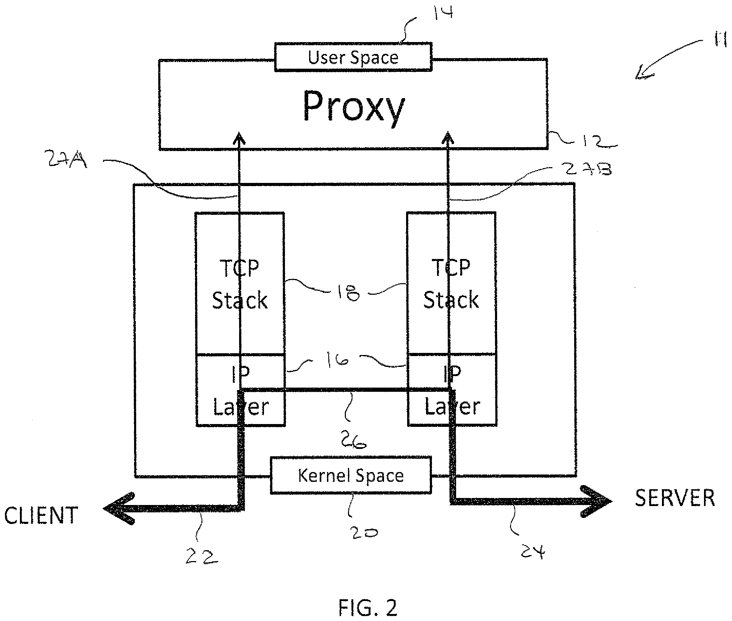

An example of the application of the above technique is now described with reference to Figure 2 which schematically illustrates a client - server connection 11 including the use of TCP splicing. Client-server connection 11 includes proxy 12 in user space 14, and IP layer 16 and TCP stack 18 in kernel space 20. Client - server connection is initially established by proxy 12 in user space 14, for example through connection 27A through which packets initially received from the client through network connection 22 may be sent from kernel space 20 to user space 14, and through connection 27B for packets initially received from the server through network connection 24. Once proxy 12 determines from the initial packets the client socket and the server socket, a splice connection 26 may be established by the proxy in kernel space 20 within IP layer 16. So long as splice connection 26 is maintained, the packets are transferred directly through IP layer 16 without having to go through proxy 12, substantially increasing system performance compared to representative client - server connection 10 shown in Figure 1.

Li, Zhao et. al, "SpliceNP: A TCP Splicer using A Network Processor" IEEE Symposium on Architectures for Networking and Communications Systems, 2005, Pages: 135 - 143, discloses a method for offloading the protocol processing of TCP splicing in content-aware switches onto network processors. In particular, protocol design and implementation of a content-aware switch has been done using network processors.

US2006/0190609 A1 discloses a method of splicing proxied web requests with callback for subsequent requests, wherein the method comprises initiating by a proxy a TCP splice between first and second socket connections and returning control of first and second socket connections to the proxy in response to a completion event associated with the TCP splice.

### SUMMARY OF THE PRESENT INVENTION

The object of the present invention is to improve a network communication between a client and a server. This object is solved by the subject matter of the independent claims. The dependent claims protect further embodiments thereof.

There is provided, in accordance with the present invention, a system for offloading information transfer between a client and a server in accordance with claim 1.

In accordance with an embodiment of the present invention, the network controller resides on the network.

In accordance with an embodiment of the present invention, the network controller includes a load balancer.

In accordance with an embodiment of the present invention, the network agent receives the TCP splice command in a socket layer of a TCP/IP stack.

In accordance with an embodiment of the present invention, the network controller includes a protocol oblivious forwarding controller.

In accordance with an embodiment of the present invention, the network controller directly connects the client with the server through the network.

There is provided, in accordance with an embodiment of the present invention, a method for offloading information transfer between a client and a server from a TCP/IP stack in a communications network, according to claim 7.

In accordance with an embodiment of the present invention, the receiving includes intercepting the TCP command.

In accordance with an embodiment of the present invention, the receiving is through a socket layer of the TCP/IP stack.

In accordance with an embodiment of the present invention, the method additionally includes the network controller modifying a TCP and/or an IP header in a packet.

In accordance with an embodiment of the present invention, the method additionally includes the network controller maintaining proxy functionality according to any one of a duration of the lifetime of sockets; an amount of time required to transfer information from the client to the server and/or from the server to the client; an amount of information transferred from the client to the server and/or from the server to the client; a time-out value to set up a network splice; and a request or override received from the application proxy.

In accordance with an embodiment of the present invention, the method additionally includes the network controller returning proxy functionality to the application proxy.

In accordance with an embodiment of the present invention, the method additionally includes the network controller offloading the information transfer to a network.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Figure 1 schematically illustrates a representative client - server network connection;
Figure 2 schematically illustrates a representative client - server network connection including use of TCP splicing;
Figure 3 schematically illustrates a client - server network connection including a Network Extended TCP Splicing system, according to an embodiment of the present invention; and

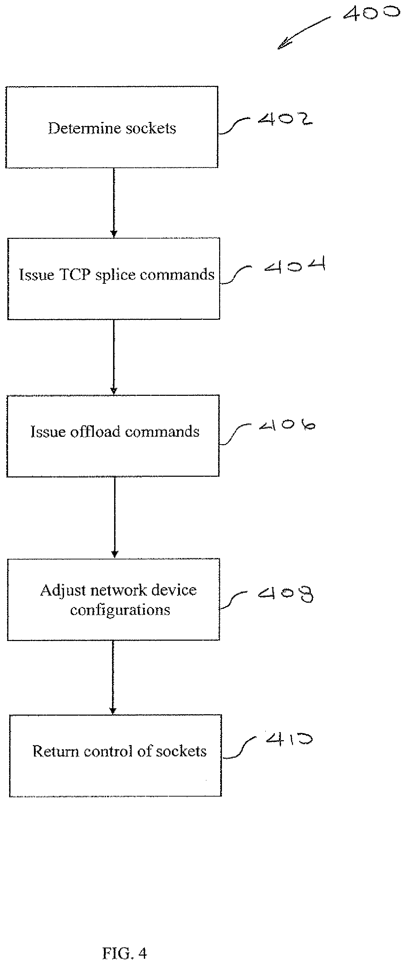

Figure 4 is a flow chart of a method of offloading information to a network using the Network Extended TCP Splicing system, according to an embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Applicants have realized that, despite the advantages provided by the use of known TCP splicing techniques, the functionality of the TCP splicing may be limited by the capacity of the hardware on which the application proxy sits. For example, a CPU may have insufficient processing power to drive the TCP/IP software, or may experience increased utilization due to latency in memory devices and I/O devices. Whichever may be the case, hardware capacity limitations may degrade overall system performance.

Applicants have further realized that the above problem associated with limited hardware capacity may be overcome by offloading information transfer to the network and recalling the information "on request". Applicants have additionally realized that techniques used for TCP splicing which enable the application proxy to offload information transfer between two sockets to the OS kernel (kernel space) may be applied to enable the application proxy to offload information transfer between the two sockets to the network. Offloading to the network, Applicants have realized, may leverage network forwarding performance through increased proxy capacity.

### Description of Network Extended TCP Splicing System

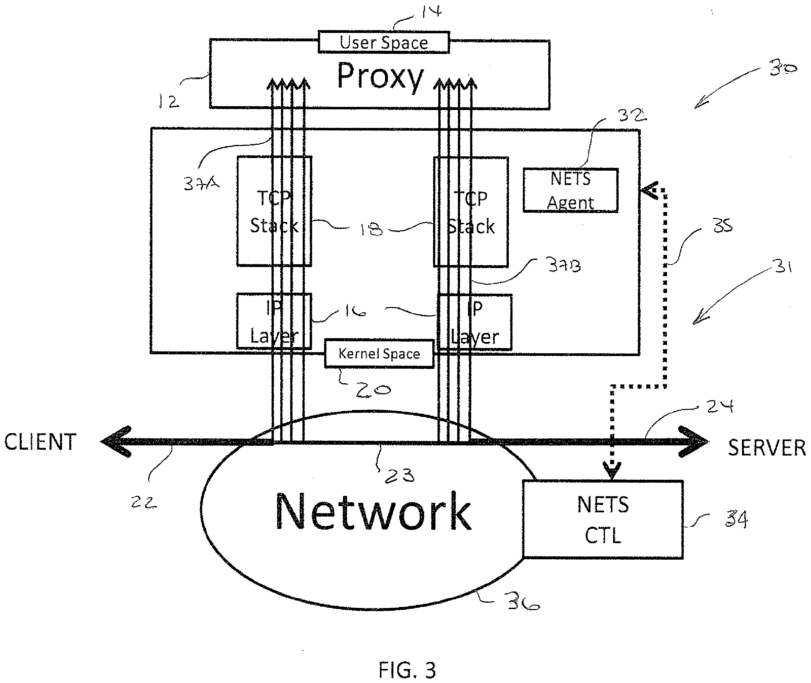

Reference is now made to Figure 3 which schematically illustrates a client - server network connection 30 including a Network Extended TCP Splicing (NETS) system 31, according to an embodiment of the present invention. Client-server connection 30 may additionally include application proxy 12 in user space 14, and IP layer 16 and TCP stack 18 in kernel space 20. NETS system 31 may include a NETS agent 32 and a NETS controller 34. NETS system 31 may additionally an altered configuration of TCP stack 18 which may include NETS agent 32 as described further on below. NETS system 31 may additionally include a network 36 which may be implemented through SDN (software-defined networking) and may include use of protocol oblivious forwarding (POF).

NETS system 31 may use application proxy 12 interceptions of client-server connections at the socket layer to offload information transfer between two sockets (client and server) to network 36. At network 36, NETS system 31 may create a NETS TCP splice 23 to allow a direct connection of the client with the server over the network instead of through kernel space 20 as is commonly done in the art. Furthermore, NETS system 31 may transfer proxy functionality from application proxy 12 to network 36 to allow load balancing to be performed at the network.

As part of the offloading process, NETS system 31 may maintain proxy functionality at network 36 based on one or more predetermined criteria. These may include (a) a duration of the lifetime of the sockets; (b) an amount of time required to transfer the information from the client to the server and/or from the server to the client; (c) an amount of information to be transferred from the client to the server and/or from the server to the client; (d) a time-out value to set up the splice; (f) an override received from the application proxy; (g) or other events which may be associated with the client - server connection and information transfer; (h) or any combination thereof. NET system 31 may additionally transfer proxy functionality from network 36 to application proxy 12 to return control of the sockets "on request", which may be upon termination of any one or any combination of the previously mentioned events or upon determination that there is no need to offload information.

As may be appreciated from Figure 3, as a result of creating NETS TCP splice 23 interconnecting network connections 22 and 24, packets may be directly transferred between the client and the server through network 36 without passing through kernel space 20 (and also without passing through user space 14). In operation, the connection between the client and the server may be initially established by proxy 12, for example, through connections 37A and 37B in a similar fashion to connections 27A and 27B in Figure 2. Once the connection is established NETS system 31 may then create NETS TCP splice 23 offloading information transfer to network 36 with proxy functionality transferred to the NETS system. Upon termination of the offloading, proxy functionality may be returned back to application proxy 12 as shown by connection 37A for packets sent by the client and by connection 37B for packets sent by the server.

NETS agent 32 may receive TCP splicing commands from proxy 12 and, responsively, send offload commands to NETS controller 34, as shown by double headed arrow 35. The splicing commands may be intended for the socket layer and may be intercepted by NETS agent 32 acting as a proxy. Alternatively, the splicing commands may be specifically intended for NETS agent 32. On some occasion, NETS agent 32 may receive the splicing commands from proxy 12 and may not act on the commands (i.e. not send offload commands to NETS controller 34), for example, when network 36 capacity is not suitable for offloading.

NETS agent 32 may include a module which may be integrated into TCP stack 18 (altered TCP stack) in kernel space 20. The module may be integrated within the socket layer, or in addition to the socket layer in TCP stack 18. Alternatively, NETS agent 32 may replace the socket layer. NETS agent 32 may include hardware and/or software, and may additionally include an API (application program interface) for interfacing with application proxy 12 and/or NETS controller 34.

NETS controller 34 may be integrated to network 36 and may receive the offload commands from NETS agent 32. NETS controller 34 may additionally translate the commands into network device configurations to create NETS TCP splice 23 and allow load balancing to be performed in network 36. NETS controller 34 may additionally send information to NETS agent 32 associated with network 36 capacity. The network information may be sent to NETS agent 32 through a northbound interface, also indicated by double headed arrow 35.

NETS controller 34 may use fast path offloading (FPO) to offload traffic processing to network 36. Use of FPO may allow NETS controller 34 to forward and redirect one or more packets in network 31 to another destination by modifying the TCP and IP fields, for example, by changing TCP and IP headers in the packets. The modifications made to the TCP and IP headers may include information associated with source and destination IP, source and destination port and event TCP.seq and TCP.ack number.

### Implementation Example of Socket Extension in NETS System

Following are exemplary function calls which may be used by the NETS System to perform the various functions described below:
(a) int NETS_attach(int fd1, int fd2)
   /* attaches two sockets for future offload. returns fd to newly created control socket */
(b) int write(int ctl_sckt, char *ctl_buf, int)
   /* ctl buf contains request for offloading + parameters such as timeout, byte number etc... if request successful, the application is expected not to read and/or write from the sockets attached to the control socket. */
(c) struct pollfd
   /* new event: NETS_resume This is the event we expect to receive while polling on a control socket. It means that NETS has returned control of the attached sockets to the application/ Upon reception of the NETS resume the application can read from the control socket data relevant to the resume such as number of bytes transferred. Also, after NETS_resume that application can resume reading and writing from/to the attached sockets. */
   int read(int ctl_sckt, char *CTL_buf, int) /* read from control socket a control buf. Called after NETS resume received on control socket during poll. Contains information such as - number of bytes sent since last offload, time elapsed since last offload & flags such a FIN/RST sent etc... */

### Exemplary Method for Offloading Using NETS

Following is described an exemplary method 400 of offloading information transfer to a network including a NETS TCP splice, according to an embodiment of the present invention. For clarity, exemplary method 400 described herein will be explained with reference to NETS system 31 and client - server connection 30. Furthermore, the ordinary person skilled in the art may realize that method 400 may be practiced with more or less steps and/or with a different sequence of steps. At step 402, the server socket and the client socket may be determined by application proxy 12. The sockets may be determined from one or more initial packets received through network connection 22 and/or server connection 24 and which pass through kernel space 20 and are intercepted in the socket layer by application proxy 12.

At step 404, application proxy 12 may issue a TCP splice command to create a TCP splice in kernel space 20 based on the sockets' information. The TCP splice command may be intercepted by NETS agent 32.

At step 406, an offload command may be issued by NETS agent 32 to NETS controller 34 responsive to the TCP splice command from application proxy 12.

At step 408, NETS controller 34 may receive the offload command from NETS agent 32 and responsive to the command, takes proxy control of network 36. NETS controller may adjust network device configurations in the packets, for example, by modifying the TCP and IP headers in the packets to perform load balancing. NETS controller 34 may retain control of the proxy functionality according to predetermined criteria which may include any one or combination of (a) a duration of the lifetime of the sockets; (b) an amount of time required to transfer the information from the client to the server and/or from the server to the client; (c) an amount of information to be transferred from the client to the server and/or from the server to the client; (d) a time-out value to set up the splice; (f) a request or override received from the application proxy; (g) or other events which may be associated with the client - server connection and information transfer. While proxy functionality is maintained by NETS controller 34, information transfer between the client and the server is direct through network 36 (through network splice 23).

At step 410, NETS controller 34 returns control of the proxy functionality to application proxy 12 upon termination of the offloading. Termination may be based on the predetermined criteria for returning control and may include signaling to NETS agent 32 that the control is to be returned. Alternatively, signaling that the control of proxy functionality is to be returned to proxy 12 may originate from NETS agent 32 according to the predetermined criteria. The signaling may include signaling to application proxy 12. Network splice 23 is broken and information transfer returns to proxy 12 through kernel 20 into user space 14.

Unless specifically stated otherwise, as apparent from the preceding discussions, it is appreciated that, throughout the specification, discussions utilizing terms such as "processing," "computing," "calculating," "determining," or the like, refer to the action and/or processes of a computer, computing system, or similar electronic computing device that manipulates and/or transforms data represented as physical, such as electronic, quantities within the computing system's registers and/or memories into other data similarly represented as physical quantities within the computing system's memories, registers or other such information storage, transmission or display devices. Embodiments of the present invention may include apparatus for performing the operations herein. This apparatus may be specially constructed for the desired purposes, or it may comprise a general-purpose computer selectively activated or reconfigured by a computer program stored in the computer. Such a computer program may be stored in a computer readable storage medium, such as, but not limited to, any type of disk, including floppy disks, optical disks, magnetic-optical disks, read-only memories (ROMs), compact disc read-only memories (CD-ROMs), random access memories (RAMs), electrically programmable read-only memories (EPROMs), electrically erasable and programmable read only memories (EEPROMs), magnetic or optical cards, Flash memory, or any other type of media suitable for storing electronic instructions and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems appears from the description above. In addition, embodiments of the present invention are not described with reference to any particular programming language. It will be appreciated that a variety of programming languages may be used to implement the teachings of the invention as described herein.

While certain features of the invention have been illustrated and described herein, many modifications, substitutions, changes, and equivalents will now occur to those of ordinary skill in the art. It is, therefore, to be understood that the appended claims are intended to define of the invention.

## Claims

1. A system for offloading information transfer between a client and a server in a communications network (36) comprising:
a network agent (32) residing in a kernel space (20) of a TCP/IP stack to transfer proxy functionality from an application proxy to a network controller (34) to offload data transfer from the kernel space (20) to the network (36), responsive to the application proxy (12) issuing (404) a transmission control protocol, TCP, splice command and the network controller (34) being integrated to the network;
wherein the network (36) is a software-defined network, SDN, and is comprised in said system.

2. A system according to claim 1 wherein said network agent (32) resides in the TCP stack in the kernel space (20) of the TCP/IP stack.

3. A system according to claim 1 wherein said network controller (34) resides on the network.

4. A system according to claim 1 wherein said network agent (32) receives the TCP splice command in a socket layer of a TCP/IP stack.

5. A system according to claim 1 wherein said network controller comprises a protocol oblivious forwarding controller.

6. A system according to claim 1 wherein said network controller (34) directly connects the client with the server through said network (36).

7. A method for offloading information transfer between a client and a server from a TCP/IP stack in a communications network , the method comprising:
transferring, by a network agent (32) residing in a kernel space (20) of the TCP/IP stack, proxy functionality from an application proxy (12) to a network controller integrated in the network (36) to offload data transfer from the kernel space (20) to a network (36), responsive to the application proxy (12) issuing (404) a TCP splice command;
wherein the network (36) is a software-defined network, SDN.

8. A method according to claim 7 further comprising receiving the TCP splice command by a network agent (32).

9. A method according to claim 8 further comprising the network agent sending (406) an offload command to the network controller responsive to said receiving.

10. A method according to claim 8 wherein said receiving is through a socket layer of the TCP/IP stack.

11. A method according to claim 7 further comprising said network controller modifying a TCP and/or an IP header in a packet.

12. A method according to claim 7 further comprising the network controller maintaining proxy functionality according to any one of a duration of the lifetime of sockets; an amount of time required to transfer information from the client to the server and/or from the server to the client; an amount of information transferred from the client to the server and/or from the server to the client; a time-out value to set up a network splice; and a request or override received from the application proxy.

13. A method according to claim 7 further comprising the network controller returning (410) proxy functionality to the application proxy.

14. A method according to claim 7 further comprising the network controller offloading the information transfer to a network.

## Patentansprüche

1. System zum Abladen eines Informationstransfers zwischen einem Client und einem Server in einem Kommunikationsnetzwerk (36), das Folgendes umfasst:
einen Netzwerkagenten (32), der sich in einem Kernelraum (20) eines TCP/IP-Stapels befindet, um in Reaktion darauf, dass ein Anwendungsproxy (12) einen Übertragungssteuerprotokoll(TCP)-Spleißbefehl erteilt (404) und eine Netzwerksteuerung (34) in das Netzwerk integriert ist, eine Proxyfunktionalität vom Anwendungsproxy zur Netzwerksteuerung (34) zu transferieren, um einen Datentransfer vom Kernelraum (20) zum Netzwerk (36) abzuladen;
wobei das Netzwerk (36) ein softwaredefiniertes Netzwerk, SDN, und in dem System umfasst ist.

2. System nach Anspruch 1, wobei sich der Netzwerkagent (32) im TCP-Stapel im Kernelraum (20) des TCP/IP-Stapels befindet.

3. System nach Anspruch 1, wobei sich die Netzwerksteuerung (34) im Netzwerk befindet.

4. System nach Anspruch 1, wobei der Netzwerkagent (32) den TCP-Spleißbefehl in einer Socketschicht eines TCP/IP-Stapels empfängt.

5. System nach Anspruch 1, wobei die Netzwerksteuerung eine protokollvergessliche Weiterleitungssteuerung umfasst.

6. System nach Anspruch 1, wobei die Netzwerksteuerung (34) den Client über das Netzwerk (36) direkt mit dem Server verbindet.

7. Verfahren zum Abladen eines Informationstransfers zwischen einem Client und einem Server von einem TCP/IP-Stapel in einem Kommunikationsnetzwerk, wobei das Verfahren Folgendes umfasst:
Transferieren durch einen Netzwerkagenten (32), der sich in einem Kernelraum (20) des TCP/IP-Stapels befindet, einer Proxyfunktionalität von einem Anwendungsproxy (12) zu einer Netzwerksteuerung, die in das Netzwerk (36) integriert ist, um in Reaktion darauf, dass der Anwendungsproxy (12) einen TCP-Spleißbefehl erteilt (404), einen Datentransfer vom Kernelraum (20) zu einem Netzwerk (36) abzuladen;
wobei das Netzwerk (36) ein softwaredefiniertes Netzwerk, SDN, ist.

8. Verfahren nach Anspruch 7, das ferner das Empfangen des TCP-Spleißbefehls durch einen Netzwerkagenten (32) umfasst.

9. Verfahren nach Anspruch 8, das ferner in Reaktion auf das Empfangen das Senden (406) eines Abladebefehls durch den Netzwerkagenten an die Netzwerksteuerung umfasst.

10. Verfahren nach Anspruch 8, wobei das Empfangen über eine Socketschicht des TCP/IP-Stapels erfolgt.

11. Verfahren nach Anspruch 7, das ferner das Modifizieren eines TCP- und/oder eines IP-Headers in einem Paket durch die Netzwerksteuerung umfasst.

12. Verfahren nach Anspruch 7, das ferner das Aufrechterhalten einer Proxyfunktionalität gemäß einem von einer Dauer der Lebenszeit von Sockets; einer Menge Zeit, die zum Transferieren von Informationen vom Client zum Server und/oder vom Server zum Client erforderlich ist; einer Menge Informationen, die vom Client zum Server und/oder vom Server zum Client transferiert werden; einem Zeitablaufwert zum Einrichten einer Netzwerkspleißung sowie einer Anforderung oder Außerkraftsetzung, die vom Anwendungsproxy empfangen wird, durch die Netzwerksteuerung umfasst.

13. Verfahren nach Anspruch 7, das ferner das Zurückgeben (410) einer Proxyfunktionalität durch die Netzwerksteuerung an den Anwendungsproxy umfasst.

14. Verfahren nach Anspruch 7, das ferner das Abladen des Informationstransfers durch die Netzwerksteuerung zu einem Netzwerk umfasst.

## Revendications

1. Système de délestage d'un transfert d'informations entre un client et un serveur dans un réseau de communication (36), comprenant :
un agent de réseau (32) résidant dans un espace de noyau (20) d'une pile TCP/IP pour transférer une fonctionnalité de serveur mandataire d'un serveur mandataire d'applications à un contrôleur de réseau (34) pour délester un transfert de données de l'espace de noyau (20) au réseau (36), en réponse à l'émission (404), par le serveur mandataire d'applications (12), d'une commande d'épissage sur protocole de contrôle de transmission (TCP), et
le contrôleur de réseau (34) étant intégré au réseau ;
le réseau (36) étant un réseau défini par logiciel (SDN) et compris dans ledit système.

2. Système selon la revendication 1, dans lequel ledit agent de réseau (32) réside dans la pile TCP dans l'espace de noyau (20) de la pile TCP/IP.

3. Système selon la revendication 1, dans lequel ledit contrôleur de réseau (34) réside sur le réseau.

4. Système selon la revendication 1, dans lequel ledit agent de réseau (32) reçoit la commande d'épissage TCP dans une couche d'échange d'une pile TCP/IP.

5. Système selon la revendication 1, dans lequel ledit contrôleur de réseau comprend un contrôleur de transfert insensible au protocole.

6. Système selon la revendication 1, dans lequel ledit contrôleur de réseau (34) connecte directement le client au serveur par l'intermédiaire dudit réseau (36).

7. Procédé de délestage d'un transfert d'informations entre un client et un serveur d'une pile TCP/IP dans un réseau de communication, le procédé consistant à :
transférer, par un agent de réseau (32) résidant dans un espace de noyau (20) de la pile TCP/IP, une fonctionnalité de serveur mandataire d'un serveur mandataire d'applications (12) à un contrôleur de réseau intégré dans le réseau (36) pour délester un transfert de données de l'espace de noyau (20) à un réseau (36), en réponse à l'émission (404), par le serveur mandataire d'applications (12), d'une commande d'épissage TCP ;
le réseau (36) étant un réseau défini par logiciel (SDN).

8. Procédé selon la revendication 7, consistant en outre à recevoir la commande d'épissage TCP par un agent de réseau (32).

9. Procédé selon la revendication 8, consistant en outre à envoyer (406), par l'agent de réseau, une commande de délestage au contrôleur de réseau en réponse à ladite réception.

10. Procédé selon la revendication 8, dans lequel ladite réception est réalisée par l'intermédiaire d'une couche d'échange de la pile TCP/IP.

11. Procédé selon la revendication 7, consistant en outre à modifier, par ledit contrôleur de réseau, un en-tête TCP et/ou un en-tête IP dans un paquet.

12. Procédé selon la revendication 7, consistant en outre à garantir, par le contrôleur de réseau, une fonctionnalité de serveur mandataire selon une durée quelconque de la durée de vie d'échanges ; une période de temps requise pour transférer une information du client au serveur et/ou du serveur au client ; une quantité d'informations transférées du client au serveur et/ou du serveur au client ; une valeur d'expiration pour configurer un épissage de réseau ; et une demande ou un remplacement reçu(e) du serveur mandataire d'applications.

13. Procédé selon la revendication 7, consistant en outre à renvoyer (410), par le contrôleur de réseau, la fonctionnalité de serveur mandataire au serveur mandataire d'applications.

14. Procédé selon la revendication 7, consistant en outre à délester, par le contrôleur de réseau, le transfert d'informations vers un réseau.
